# EUROPÄISCHE PATENTSCHRIFT

(11) **EP 0 759 163 B1**
(45) Veröffentlichungstag und Bekanntmachung des Hinweises auf die Patenterteilung: **04.07.2001**
(21) Anmeldenummer: 95919409.3
(22) Anmeldetag: 05.05.1995
(51) Int. Cl.: G01N 27/407

(54) **GASSENSOR**
GAS SENSOR
CAPTEUR DE GAZ

(30) Priorität: 05.05.1994 DE 4415938
(43) Veröffentlichungstag der Anmeldung: 26.02.1997
(73) Patentinhaber: Heraeus Electro-Nite International N.V., 3530 Houthalen (BE)
(72) Erfinder: HÄFELE, Edelbert, D-76228 Karlsruhe (DE); HUBER, Jörg, D-76448 Durmersheim (DE)
(74) Vertreter: Kühn, Hans-Christian
(86) Internationale Anmeldenummer: EP9501713
(87) Internationale Veröffentlichungsnummer: WO9530893

(56) Entgegenhaltungen:
- EP-A- 0 087 626
- EP-A- 0 520 528
- WO-A-92/08127
- WO-A-93/16379
- DE-A- 3 537 051
- US-A- 3 844 920
- US-A- 3 847 778
- US-A- 4 786 399
- US-A- 5 228 975

## Beschreibung

Die Endung betrifft einen Gassensor, vorzugsweise eine Lambda-Sonde zur Ermittlung des Schadstoff- und/oder Sauerstoffanteils in Abgasen gemäß dem Oberbegriff des Patentanspruchs 1.

Derartige Sensoren sind aus WO-A-92/08127 bekannt. Hier ist ein Gasmessfühler mit einem Sensorträger offenbart, der durch ein Keramikteil hindurchgeführt ist. Dieses Keramikteil wird innerhalb eines Gehäuses gehalten. Eine Dichtung erfolgt auf der dem Messgas abgewandten Seite des Keramikteils durch eine Dichtung, die zwischen dem ersten Keramikteil und einem zweiten Keramikteil zusammengedrückt wird und die abdichtend auf den Sensorträger wirkt. Des weiteren ist zwischen dem Keramikteil und dem Metallgehäuse ein Dichtring angeordnet, der eine Gasdichtung realisiert.

Ähnliche Gassensoren sind bekannt (DE-42 04 850 A1) und weisen ein in einem Schutzgehäuse angeordnetes Keramikteil zur Aufnahme eines Sensorträgers auf, der an seinem abgasseitigen Ende die eigentlichen Sensorelemente trägt und dessen anderes Ende in den Kontaktbereich von Kontaktelementen ragt. Die im Keramikteil aufgenommenen Kontaktelemente sind mit aus dem Schutzgehäuse ragenden elektrischen Anschlüssen in leitender Verbindung.

Das Keramikteil wird hierbei aus herstellungstechnischen Gründen von zwei spiegelbildlich zueinander angeordneten und eine identische Form aufweisenden Teilstücken gebildet, deren Form so gestaltet ist, dass bei lagerichtig aufeinanderliegenden Teilstücken sowohl der Sensorträger als auch die Kontaktelemente im Keramikteil lagefixiert sind.

Keramikteile dieser Art gestatten infolge der in Längsrichtung des Gassensors verlaufenden Trennebene zwar ein einfaches Einlegen und Fügen sowohl des Sensorträgers als auch der Kontaktelemente, sie weisen jedoch eine relativ große Trennfläche auf. Hierdurch werden besondere Anforderungen an die Planparallelität der beiden einander gegenüberliegenden Trennflächen gestellt, die beim Brennvorgang beispielsweise beim Sintern der beiden Teilstücke nicht immer oder nur mit relativ großem Aufwand erfüllt werden können. Sind die beiden Trennflächen nicht einwandfrei planparallel, so treten Dichtigkeitsprobleme auf.

Der Erfindung liegt die Aufgabe zugrunde, einen Gassensor zu schaffen, dessen Montagrkosten durch eine einfache Fügbarkeit seiner Einzelteile minimiert werden.

Diese Aufgabe wird bei einem gattungsgemäßen Gassensor durch die kennzeichnenden Merkmale des Hauptanspruchs gelöst.

Durch den zwischen dem Metallgehäuse und Keramikteil herrschenden Formschluß ist letzteres in äußerst einfacher und sicherer Weise in radialer Richtung im Metallgehäuse gehalten, als auch über die Gasdichtungsflächen eine Abdichtung für das aus dem Abgasraum ausströmende Gas erreicht. Im Falle der Ausbildung dieses Formschlusses als Kegelverbindung und entsprechender Wahl des Kegelverhältnisses wird gleichzeitig nicht nur eine axiale Fixierung des Keramikteils, so daß ein weiteres, gegebenenfalls zwischen dem Keramikteil und dem Metallgehäuse angeordnetes Dichtelement nur einem gegenüber dem im Abgasraum herrschenden Druck erheblich verminderten Druck ausgesetzt ist.

Weitere vorteilhafte Ausgestaltungen und Weiterbildungen sowie Vorteile ergeben sich aus den Unteransprüchen.

Die Erfindung ist anhand eines bevorzugten Ausführungsbeispiels anhand der Zeichnungen näher erläutert. In dieser zeigt:
- Figur 1: einen Längsschnitt durch den erfindungsgemäßen Gassensor;
- Figur 2: eine Draufsicht der Fig. 1, teilweise geschnitten; und
- Figur 3: eine Seitenansicht des Gassensors.

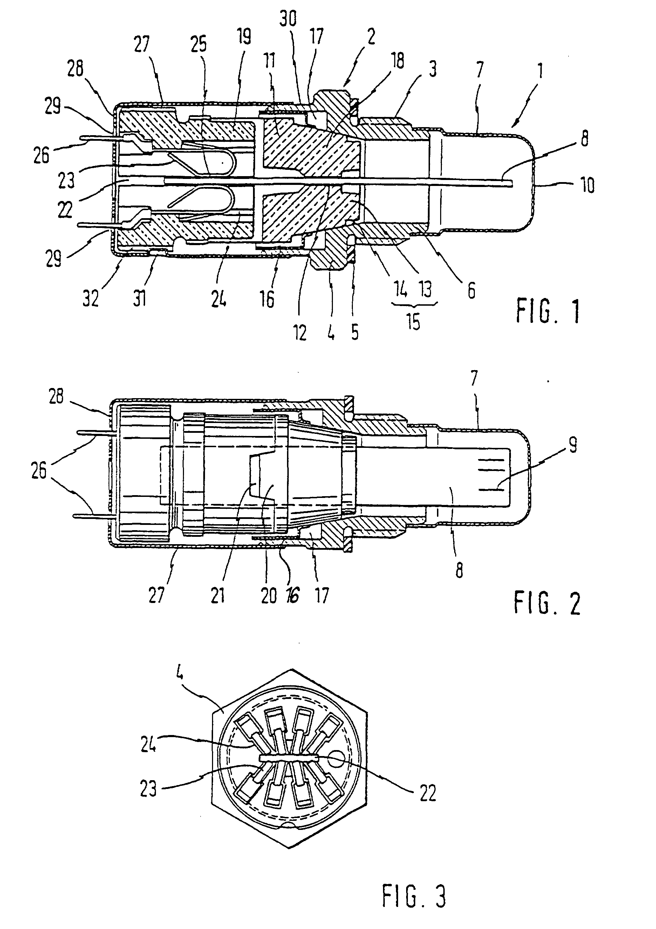

Der in Figur 1 insgesamt mit 1 bezeichnete Gassensor weist ein Metallgehäuse 2 auf, das an seinem abgasseitigen Ende mit einem Einschraubgewinde 3 versehen ist. Dem Einschraubgewinde 3 ist ein Schlüsselsechskant 4 nachgeordnet, mit dessen Hilfe der Gassensor 1 unter Zwischenlage eines Dichtringes 5 in ein entsprechendes Gewinde eines nicht dargestellten Abgasraumes einschraubbar ist.

Das Metallgehäuse 2 weist an seinem vorderen Ende einen zylinderförmigen Ansatz 6 auf, der zur Aufnahme einer Schutzhülse 7 für einen Sensorträger 8 mit darauf angeordneten, beispielsweise gedruckten Sensorelementen 9 dient. Die Schutzhülse 7 ist in ansich bekannter Weise mit Durchdringungen 10 versehen, wodurch die Sensorelemente 9 vom Abgas umströmt werden können.

Zur Aufnahme des Sensorträgers 8 dient ein Keramikteil 11, das einen Durchtrittsschlitz 12 für diesen aufweist und mit seinem darauf angeordneten zumindest einen Sensorelement in den - nicht gezeigten Abgasraum- vorspringt. Zur gasdichten Abdichtung des Durchtrittsschlitzes 12 in seinem abgassseitigen Bereich kann dieser vergossen oder der Sensorträger 8 in den Durchtrittsschlitz 12 eingeklebt sein. Hierzu sind desweiteren zwei Ausnehmungen 40, 41 vorgesehen, wobei in die abgasseitige 41 ein temperaturfestes und weniger gasdichtes Dichtmaterial, z.B. Keramikkleber und in die andere Ausnehmung 40 ein weniger temperaturfestes aber gasdichteres Dichtmaterial einfüllbar ist.

Der abgasseitige Bereich 13 des Keramikteils 11 ist um den Durchtrittsschlitz 12 herum kegelstumpfartig ausgebildet und ragt in eine entsprechende kegelförmige erste Bohrung 14 des Metallgehäuses 2. Das Keramikteil 11 wird durch die so gebildete formschlüssige Verbindung 15 in radialer Richtung im Metallgehäuse 2 lagefixiert. Bei entsprechender Gestaltung des Kegelverhältnisses kann das Keramikteil 11 innerhalb des Metallgehäuses 2 auch in axialer Richtung fixiert werden. Um die beiden Kegel mit relativ großen Toleranzen fertigen zu können, kann das Keramikteil 11 innerhalb des Metallgehäuses durch eine zusätzliche Klebeverbindung lagegesichert werden.

Wie aus Figur 2 ersichtlich, ist auf der Außenwandung des kegelstumpfförmig gestalteten abgasseitigen Bereichs 13 des Keramikteils 11 ein im wesentlichen ringförmig gestaltetes Dichtelement 16 befestigt, das in einer bevorzugten Ausführungsform des Gassensors an der Wandung einer im Metallgehäuse 2 vorgesehenen zweite Bohrung 17 federnd mit einer Vorspannung anliegt und damit einen Austritt des Abgases verhindert. Das Keramikteil 11 ist durch Hochtemperaturlöten mit dem Dichtelement 16 verbunden, das seinerseits abgasdicht in die zweite Bohrung 17 eingeschweißt ist. Die Vorspannung kann entweder von dem Dichtelement 16 oder aber von einer Federscheibe auf den der Abgasseite abgewandten Bereich erhalten werden.

Das Keramikteil 11 ist beim gezeigten Ausführungsbeispiel von zwei axial zueinander angeordneten Teilstücken 18, 19 gebildet, wobei lediglich das eine Teilstück 18 im wesentlichen innerhalb des Metallgehäuses 2 angeordnet und in der vorbeschriebenen Weise in diesem lagefixiert ist und der Sensorträger 8 um einen bestimmten Betrag aus dem einen Teilstück 18 ragt.

Das eine Teilstück 18 weist an seiner dem anderen Teilstück 19 zugekehrten Stirnseite mindestens einen Vorsprung 20 auf, der in eine an der Stirnseite des anderen Teilstückes 19 vorgesehene Aussparung 21 ragt. Das andere Teilstück 19 ist mit einem zum Durchtrittsschlitz 12 im einen Teilstück 18 korrespondierenden Aufnahmeschlitz 22 versehen, der zur Aufnahme des gegenüber dem einen Teilstück 18 vorstehenden Bereich des Sensorträgers 8 dient.

Das andere Teilstück 19 dient ferner zur Aufnahme von Kontaktelementen 23, die innerhalb von acht eingearbeiteten Schlitzen 24 angeordnet sind. Die Schlitze 24 sind (siehe Figur 3) radial gerichtet und erstrecken sich jeweils bis zum Aufnahmeschlitz 22, zu dem und zu dessen senkrechten Mittelebene sie spiegelsymmetrisch angeordnet sind. Je weiter sie von der senkrechten Mittelebene 43 angeordnet sind, umsomehr mehr weichen sie von der rechtwinkligen Ausrichtung bezüglich des Schlitzes 22 ab.

Die Kontaktelemente 23 sind an ihrem einen Ende bügelförmig gestaltet, so daß sie mit ihrem zum Sensorträger 8 im wesentlichen parallel verlaufenden Bereich 25 federnd auf diesem aufliegen und die auf dem Sensorträger 8 vorgesehenen - nicht gezeigten - beispielsweise aufgedruckten oder aufgedampften elektrischen Bahnen und somit die Sensorelemente 9 mit den elektrischen Anschlüssen 26 verbinden.

Zur Kapselung des Gassensors 1 ist eine Hülse 27 vorgesehen, deren Boden 28 Öffnungen 29 aufweist, die von den elektrischen Anschlüssen 26 durchdrungen werden. Das andere Ende der Hülse 27 ist mit einem zylindrischen Ansatz 30 des Metallgehäuses fest verbunden. Im Bereich des Bodens weist die Hülse 27 einen nach innen gerichteten Vorsprung 31 auf, der in eine von zwei im Teilstück 19 vorgesehenen Nuten 32 eingreift, um hierdurch die Relativlage der Anschlüsse 26 zu den im Boden 28 vorgesehenen Öffnungen 29 vorzugeben.

## Patentansprüche

1. Gassensor, vorzugsweise eine Lambda-Sonde zur Ermittlung des Schadstoff- und/oder Sauerstoffanteils im Abgas von Brennkraftmaschinen oder Ofenanlagen mit einem Metallgehäuse, das Befestigungsmittel für den Einbau des Gassensors in einen Abgasraum aufweist, einem innerhalb des Metallgehäuses angeordneten Keramikteil zur Aufnahme eines Sensorträgers mit Sensorelementen, dessen eines Ende in den Abgasraum ragt und dessen anderes Ende mit elektrischen Anschlüssen verbindbar ist, wobei das Keramikteil in seinem abgasseitigen Bereich (13) kegelstumpfartig ausgebildet ist und das Metallgehäuse (2) eine entsprechend kegelförmig gestaltete Bohrung (14) aufweist, dadurch gekennzeichnet, daß das Keramikteil (11) in seinem abgasseitigen Bereich (13) mittels eines Formschlusses (15) in mindestens radialer Richtung im Metallgehäuse (2) fixiert ist und daß in einem dem Formschluß (15) nachgeordneten Bereich des Keramikteils (11) ein Dichtelement (16) vorgesehen ist, dessen eines Ende mit der Außenwandung des kegelstumpfartigen Bereiches (13) des Keramikteils (11) fest verbunden ist und der Bereich dessen anderen Endes unter Vorspannung an einer Wandung einer im Metallgehäuse (2) vorgesehenen Bohrung (12) gasdicht anliegt.

2. Gassensor nach Anspruch 1, dadurch gekennzeichnet, daß das Keramikteil (11) durch den Formschluß (15) auch in axialer Richtung im Metallgehäuse fixiert ist.

3. Gassensor nach Anspruch 1 oder 2, dadurch gekennzeichnet, daß das Ende des Dichtelementes (16) mit dem Metallgehäuse (2) gasdicht verbunden ist.

4. Gassensor nach Anspruch 1, dadurch gekennzeichnet, daß das Keramikteil (11) in axialer Richtung in zwei innerhalb des Metallgehäuses (2) angeordnete Teilstücke (18, 19) unterteilt ist, deren eines (18) mit dem Sensorträger (8) fest verbunden ist und deren anderes (19) Kontaktelemente (23) aufnimmt und einen Aufnahmeschlitz (22) für den Sensorträger (8) aufweist.

5. Gassensor nach Anspruch 4, dadurch gekennzeichnet, daß eines der Teilstücke (18) an seiner dem anderen Teilstück (19) zugekehrten Stirnseite einen Vorsprung (20) aufweist, der in eine im anderen Teilstück (19) vorgesehene Ausnehmung (21) ragt.

6. Gassensor nach Anspruch 1, dadurch gekennzeichnet, daß das Keramikteil (11) an seiner Mantelfläche eine zu seiner Längsachse im wesentlichen parallelgerichtete Nut (32) zur Aufnahme eines an einer das Keramikteil (11) umgreifenden Hülse (27) vorgesehenen Vorsprungs (31) aufweist.

7. Gassensor nach Anspruch 6, dadurch gekennzeichnet, daß die Nut (32) im Bereich des abgasfernen Endes des Keramikteils (11) angeordnet ist.

8. Gassensor nach einem der Ansprüche 1 bis 7, dadurch gekennzeichnet, daß das eine Teilstück (18) des Keramikteils (11) doppelwandig ausgebildet ist.

9. Gassensor nach einem der Ansprüche 1 bis 8, dadurch gekennzeichnet, daß das eine Teilstück (18) des Keramikteils (11) im Bereich des Durchtrittschlitzes (12) eine abgasseitige (41) und eine demgegenüber abgewandte Ausnehmung (40) zur Aufnahme von Dichtmaterial, z. B. Keramikkleber (bei 41) bzw. Glas (bei 40) aufweist.

10. Gassensor nach Anspruch 9, dadurch gekennzeichnet, daß die Kontaktelemente (23) in-Schlitzen (24) angeordnet sind.

11. Gassensor nach Anspruch 10, dadurch gekennzeichnet, daß die Schlitze (24) zu dem Aufnahmeschlitz (22) spiegelsymmetrisch angeordnet ist.

12. Gassensor nach Anspruch 10 oder 11, dadurch gekennzeichnet, daß die Schlitze (24) zu der rechtwinkligen Mittelebene (43) des Aufnahmeschlitzes (22) spiegelsymmetrisch angeordnet sind.

13. Gassensor nach einem der Ansprüche 10 bis 12, dadurch gekennzeichnet, daß die Schltize (24) zu dem Aufnahmeschlitz (22) umso mehr von dessen rechtwinkliger Erstreckung abweichen, umso weiter sie von der rechtwinkligen Mittelebene (43) entfernt angeordnet sind.

14. Gassensor nach einem der Ansprüche 1 bis 13, dadurch gekennzeichnet, daß die Kontaktelemente (23) an ihrem Kontaktbereich zum Sensorträger (8) ballig ausgebildet sind.

## Claims

1. Gas sensor, preferably a lambda probe for determining the proportion of pollutants and/or oxygen in the exhaust gas from internal combustion engines or furnace systems with a metal housing, which has fixings for the installation of the gas sensor in an exhaust gas chamber, a ceramic component arranged within the metal housing to hold a sensor support with sensor elements, the one end of which projects into the exhaust gas chamber and the other end of which can be connected to electrical connections, wherein the ceramic component is of a truncated cone shape in the region (13) on the exhaust gas side and the metal housing (2) having a bore (14) with a corresponding truncated cone shape, characterised in that the ceramic component (11) is fixed in the metal housing (2) by positive locking (15) in at least one radial direction in its exhaust gas side region (13) and that a sealing element (16) is provided in an region of the ceramic component (11) which follows the positive locking (15), the one end of which is permanently connected to the outer walling of the truncated cone-shaped region (13) of the ceramic component (11) and the region of which at the other end is in gas-tight contact, under pre-tensioning, with a wall of a bore (12) provided in the metal housing (2).

2. Gas sensor according to claim 1, characterised in that the ceramic component (11) is also fixed in the metal housing in the axial direction by the positive locking (15).

3. Gas sensor according to claim 1 or 2, characterised in that the end of the sealing element (16) is connected to the metal housing (2) in a gas-tight manner.

4. Gas sensor according to claim 1, characterised in that the ceramic component (11) is divided into two part components (18, 19) in the axial direction, arranged inside the metal housing (2), one of which (18) is permanently connected to the sensor support (8) and the other of which (19) holds contact elements (23) and has a mounting slot (22) for the sensor support (8).

5. Gas sensor according to claim 4, characterised in that one of the part components (18) has a projection (20) on its face side turned towards the other part component (19) which projects into a cut-out (21) provided in the other part component (19).

6. Gas sensor according to claim 1, characterised in that the ceramic component (11) has a groove (32) in its sheath surface aligned so that it is substantially parallel to its longitudinal axis to take a projection (31) provided on a sleeve (27) which envelopes the ceramic component (11).

7. Gas sensor according to claim 6, characterised in that the groove (32) is arranged in the end area of the ceramic component (11) away from the exhaust gas.

8. Gas sensor according to one of the claims 1 to 7, characterised in that one part component (18) of the ceramic component (11) has a double-walled design.

9. Gas sensor according to one of the claims 1 to 8, characterised in that the one part component (18) of the ceramic component (11) has one cut-out (41) on the exhaust gas side in the region of the penetration slot (12) and another cut-out (40) opposite and turned away from it to hold sealing material, e.g. ceramic adhesive (for 41) or glass (for 40).

10. Gas sensor according to claim 9, characterised in that the contact elements (23) are arranged in slots (24).

11. Gas sensor according to claim 10, characterised in that the slots (24) are arranged in a mirror image position in respect of the mounting slot (22).

12. Gas sensor according to claim 10 or 11, characterised in that the slots (24) are arranged in a mirror image position in respect of the perpendicular central plane (43) of the mounting slot (22).

13. Gas sensor according to one of the claims 10 to 12, characterised in that the slots (24) deviate all the more from a position at right-angles to the mounting slot (22) the further away they are arranged from the perpendicular central plane (43).

14. Gas sensor according to one of the claims 1 to 13, characterised in that the contact elements (23) have a spherical shape in their region of contact with the sensor support (8).

## Revendications

1. Détecteur de gaz, de préférence une sonde lambda pour déterminer la teneur en substances nocives et/ou en -oxygène dans des gaz d'échappement de moteurs à combustion interne ou d'installations de fours comportant un boîtier métallique, qui possède des moyens de fixation pour le montage du détecteur de gaz dans une chambre à gaz d'échappement, une pièce en céramique qui est disposée à l'intérieur du boîtier métallique, sert à recevoir un support du détecteur équipé d'éléments de détection et dont une extrémité pénètre dans la chambre à gaz d'échappement et dont l'autre extrémité peut être reliée à des bornes électriques, la pièce en céramique étant agencée avec une forme tronconique au niveau de sa partie (13) située du côté des gaz d'échappement, tandis que le boîtier métallique (2) comporte un perçage (14) agencé avec une forme conique correspondante, caractérisé en ce que la pièce en céramique (11) est fixée dans sa partie (13) située du côté des gaz d'échappement, dans une direction au moins radiale, au moyen d'un système de liaison par formes complémentaires (15), et que dans une partie de la pièce en céramique (11), disposée en aval du système de liaison par formes complémentaires (15), est prévu un élément d'étanchéité (16) dont une extrémité est reliée de façon fixe à la paroi extérieure de la partie de forme tronconique (13) de la pièce en céramique (11), et que la partie de l'autre extrémité de la pièce s'applique d'une manière étanche aux gaz et sous précontrainte contre une paroi d'un perçage (12) prévu dans le boîtier métallique (2).

2. Détecteur de gaz selon la revendication 1, caractérisé en ce que la pièce en céramique (11) est également fixée dans la direction axiale dans le boîtier métallique au moyen du système de liaison par formes complémentaires (15).

3. Détecteur de gaz selon la revendication 1 ou 2, caractérisé en ce que l'extrémité de l'élément d'étanchéité (16) est reliée au boîtier métallique (2) d'une manière étanche.aux gaz.

4. Détecteur de gaz selon la revendication 1, caractérisé en ce que la pièce en céramique (11) est divisée dans la direction axiale en deux parties (18, 19) qui sont disposées à l'intérieur du boîtier métallique (2) et dont l'une (18) est reliée de façon fixe au support (8) du détecteur et dont l'autre (19) reçoit des éléments de contact (23) et comporte une fente de logement (22) pour le support (8) du détecteur.

5. Détecteur de gaz selon la revendication 4, caractérisé en ce que l'une des parties (18) possède, sur sa face frontale tournée vers l'autre partie (19), un appendice saillant (20), qui pénètre dans un logement (21) prévu dans l'autre partie (19).

6. Détecteur de gaz selon la revendication 1, caractérisé en ce que la pièce en céramique (11) comporte sur sa surface enveloppe une rainure (32) qui est essentiellement parallèle à l'axe longitudinal de la pièce en céramique et sert à loger un appendice saillant (31) qui est prévu sur une douille (27) qui enserre la pièce en céramique (11).

7. Détecteur de gaz selon la revendication 6, caractérisé en ce que la rainure (32) est disposée dans la zone de l'extrémité, éloignée des gaz d'échappement, de la pièce en céramique (11).

8. Détecteur de gaz selon l'une des revendications 1 à 7, caractérisé en ce qu'une partie (18) de la pièce en céramique (11) est agencée avec une paroi double.

9. Détecteur de gaz selon l'une des revendications 1 à 8, caractérisé en ce qu'une partie (18) de la pièce en céramique (11) comporte, dans la zone de la fente de passage (12), un évidement (41) tourné du côté des gaz d'échappement et un évidement (40) éloigné des gaz d'échappement et qui sert à loger un matériau d'étanchéité, par exemple une colle céramique (en 41) ou du verre (en 40).

10. Détecteur de gaz selon la revendication 9, caractérisé en ce que les éléments de contact (14) sont disposés dans des fentes (24).

11. Détecteur de gaz selon la revendication 10, caractérisé en ce que les fentes (24) sont disposés d'une manière symétrique par rapport à la fente de logement (22).

12. Détecteur de gaz selon la revendication 10 ou 11, caractérisé en ce que les fentes (24) sont disposées d'une manière symétrique par rapport au plan médian perpendiculaire (43) de la fente de logement (23).

13. Détecteur de gaz selon l'une des revendications 10 à 12, caractérisé en ce que les fentes (24) s'écartent d'autant plus de la disposition perpendiculaire par rapport à la fente de logement (22) qu'elles sont plus éloignées du plan médian perpendiculaire (43).

14. Détecteur de gaz selon l'une des revendications 1 à 13, caractérisé en ce que les éléments de contact (23) sont agencés avec une forme bombée au niveau de leur zone de contact tournée vers le support (8) du détecteur.
